**Europäisches Patentamt**

**European Patent Office**

**Office européen des brevets**

(19)

(11) Veröffentlichungsnummer: **0 096 836**
**B1**

(12) # EUROPÄISCHE PATENTSCHRIFT

(45) Veröffentlichungstag der Patentschrift:
**11.05.88**

(51) Int. Cl.⁴: **H 02 K 15/04**

(21) Anmeldenummer: **83105607.2**

(22) Anmeldetag: **08.06.83**

---

(54) Vorrichtung zur Herstellung von Rotor- oder Statorspulen für elektrische Maschinen.

---

(30) Priorität: **12.06.82 DE 3222181**

(43) Veröffentlichungstag der Anmeldung:
**28.12.83 Patentblatt 83/52**

(45) Bekanntmachung des Hinweises auf die Patenterteilung:
**11.05.88 Patentblatt 88/19**

(84) Benannte Vertragsstaaten:
**CH DE FR GB IT LI**

(56) Entgegenhaltungen:
**DD - A - 50 674**
**DE - U - 1 991 024**
**US - A - 1 948 875**
**US - A - 2 192 618**
**US - A - 3 166 104**

(73) Patentinhaber: **Rist, Otto, Baindter Strasse 25,**
**D-7982 Baienfurt (DE)**

(72) Erfinder: **Rist, Otto, Baindter Strasse 25,**
**D-7982 Baienfurt (DE)**

(74) Vertreter: **Engelhardt, Guido, Dipl.-Ing.,**
**Montafonstrasse 35 Postfach 1350,**
**D-7990 Friedrichshafen 1 (DE)**

---

# Beschreibung

Die Erfindung bezieht sich auf eine Vorrichtung zur Herstellung von Rotor- oder Statorspulen für elektrische Maschinen, die aus zwei mit seitlichem Abstand zueinander auf einem an einer Wickelmaschine angebrachten antreibbaren Schablonenträger befestigten Spulenträgern, die mit einer oder mehreren übereinander angeordneten Kammern gleicher oder unterschiedlicher Grösse zur Aufnahme des Spulendrahtes versehen sind, besteht, wobei in jeweils zwei auf gleicher Höhe liegenden Kammern der Spulenträger der zu einer Spule aufzuwickelnde Spulendraht während des Spulenwickelns geführt ist und ein oder beide Spulenträger exzentrisch zu ihrer Längsachse verdrehbar jeweils auf einer Grundplatte gehalten sind, die mit dem Schablonenträger verbindbar sind bzw. ein oder beide Spulenträger achssenkrecht zu ihrer Längsachse verschiebbar sind.

Wickelvorrichtungen dieser Art sind durch die DD-A-50 674 bzw. US-A-1 948 875 bekannt. Durch Verdrehen eines Wickelbolzens, auf dem mit seitlichem Abstand zueinander angeordnete Führungsteile angebracht sind, um einen exzentrisch angeordneten Bolzen bzw. durch radiales Verschieben eines der Spulenträger in besonderen Führungen wird es bei diesen Vorrichtungen zwar ermöglicht, die gewickelten Spulen abzunehmen, die Oberfläche des Wickelbolzens bzw. des mit abstehenden Stiften versehenen Spulenträgers ist aber im Bereich der gewickelten Spulen bei deren Abnahme nicht glatt. Die Führungsteile stehen nämlich, um eine Halterung zu ermöglichen, auf der den Kammern gegenüberliegenden Seite über den Wickelbolzen über und ragen somit nach einer Drehung wie auch die an dem radial verschiebbaren Spulenträger angebrachten Stifte in die gewickelte Spule hinein. Eine leichte ungehinderte Abnahme der gewickelten Spule ist daher nicht möglich, vielmehr werden diese oftmals durch das Herausdrehen der Führungsteile bzw. durch Herausziehen der Stifte beschädigt, da einzelne Wicklungen an den Führungsteilen bzw. den Stiften hängenbleiben.

Durch DE-U-1-1 991 024 ist des weiteren eine Wickelvorrichtung bekannt, bei der als Spulenträger halbkreisförmige Scheiben verwendet werden, in deren Aussenmantelfläche die den Spulendraht aufnehmenden Kammern eingearbeitet und die mittels einer Spannschraube an dem Schablonenträger abnehmbar befestigt sind. Abgesehen davon, dass halbkreisförmige Scheiben zur Herstellung von Spulen mit kleinen Krümmungsradien nicht geeignet sind, ist das Abnehmen der Spulen bei dieser Ausgestaltung ebenfalls mit grossen Schwierigkeiten verbunden. Nach dem Lösen einer Querstrebe, durch die die Spulenträger in einem vorbestimmten seitlichen Abstand zueinander gehalten werden, sind nämlich zur Abnahme einer gewickelten Spule in Aussparungen der einen Scheibe Abnahmenadeln einzuführen, die die gewickelte Spule hintergreifen und die andere Scheibe ist radial zu verschieben. Dies erfordert einen grossen zeitlichen Aufwand und vor allem Geschick, da die Spulen beim Einführen der Abnahmenadeln sehr leicht beschädigt werden können, indem z.B. Drähte verbogen werden.

Bei mit den bekannten Vorrichtungen hergestellten Spulen, insbesondere aber bei der Herstellung von Spulen gleicher Grösse oder nur einem kurzen Spulenschritt, ist daher die Ausschussquote, trotz des erheblichen Aufwandes gross, auch sind diese Vorrichtungen insbesondere wegen der zeitaufwendigen Einstellung für Serienfertigungen nicht geeignet.

Es ist demnach Aufgabe der Erfindung, eine Vorrichtung der vorgenannten Art zu schaffen, mittels der Rotor- oder Statorspulen für elektrische Maschinen problemlos hergestellt und vor allem auch ohne Schwierigkeiten und in sehr kurzer Zeit von den Spulenträgern abgenommen werden können. Der dazu erforderliche Bauaufwand soll gering gehalten werden, so dass eine wirtschaftliche Fertigung der Wickelvorrichtung gegeben ist, insbesondere soll aber erreicht werden, dass das Abnehmen der gewickelten Spulen von den Spulenträgern kein besonderes handwerkliches Geschick erfordert und dass bei der Abnahme Beschädigungen nahezu ausgeschlossen sind.

Gemäss der Erfindung wird dies dadurch erreicht, dass die Spulenträger jeweils aus einer exzentrisch auf einer mit der Grundplatte verbundenen Welle verdrehbar gelagerten Exzenterwellen gebildet sind, an der unmittelbar oder mittels Zwischengliedern die Kammern zur Aufnahme des Spulendrahtes angebracht sind.

Nach einer andersartigen Ausgestaltung, wobei ein oder beide Spulenträger achssenkrecht zu ihrer Längsachse verschiebbar sind, können aber auch die Spulenträger jeweils aus auf einer mit der Grundplatte verbundenen Welle aufgesteckten Führungsplatten und zwischen diesen angeordneten Trennplatten gebildet sein, wobei zur Verschiebung des Spulenträgers eine parallel zur Längsachse verstellbare Leiste vorgesehen ist, mit der über einen oder mehrere verschwenkbare Hebel die auf der Welle gehaltenen untereinander gekoppelten Führungsplatten verbunden sind.

Zweckmässig ist es ferner, die zwischen den Führungsplatten angeordneten Trennplatten mit diesen über einen durchgehenden Stift od. dgl. über einen Teil des Verstellweges zwangläufig zu verbinden.

Zur zusätzlichen Verstellung der miteinander verbundenen Trennplatten ist ferner angebracht, an mindestens einem verschwenkbar gelagerten Hebel einen Ansatz vorzusehen, der in eine in eine Trennplatte eingearbeitete Nut eingreift. Dadurch können die Trennplatten durch eine Übersetzung der Verstellbewegung der axial verschiebbaren Leiste soweit nach innen geschoben werden, dass diese aussen mit den Führungsplatten bündig sind.

Um Verkantungen auszuschliessen und eine einfache Verstellung zu ermöglichen, sollte die verschiebbare Leiste mittels zweier, an deren Ende angebrachter Führungsstreben auf der die verstellbaren Führungsplatten tragenden Welle geführt und mit einem in die der Grundplatte gegenüberliegenden Strebe eingesetzten Griffstück versehen sein.

Ausserdem ist es angebracht, um den seitlichen Abstand der beiden Spulenträger exakt und in einfacher Weise auf die Grösse der jeweils zu wickelnden Spule einstellen zu können, die Spulenträger in einem oder beiden Endbereichen über eine vorzugsweise auswechselbar befestigte Leiste oder Schiene miteinander zu verbinden, die zweckmässigerweise jeweils in der Drehachse der Spulenträger an diesen zu befestigen ist.

Zu dem gleichen Zweck sollte mindestens eine der Grundplatten senkrecht zur Rotationsachse des Schablonenträgers verstellbar mit diesem verbunden sein. Dies kann in der Weise bewerkstelligt werden, dass in den Schablonenträger ein Längsschlitz eingearbeitet ist, in den die Grundplatten mit einem oder mehreren, beispielsweise in Form von zylindrisch ausgebildeten Ansätzen geführt sind, und dass die Grundplatten und der Schablonenträger mittels den Längsschlitz durchgreifender Schrauben miteinander verspannbar sind.

Zur Herstellung von Spulen gleicher Grösse ist es angebracht, die Kammern zur Aufnahme des Spulendrahtes durch in die Exzenterwelle eingesetzte, vorzugsweise zwei jeweils V-förmig von dieser in Längsrichtung des Schablonenträgers abstehende Stifte zu bilden, durch die somit die Exzenterwelle in einzelne Kammern unterteilt ist.

Es ist aber auch möglich, die Kammern zur Aufnahme des Spulendrahtes durch auf die Exzenterwelle aufgesetzte, durch diese verstellbare vorzugsweise abgestufte Führungsplatten und zwischen diesen angeordneten Trennplatten zu bilden.

Des weiteren können die Exzenterwellen mit vorzugsweise beidseitig angebrachten und in Längsrichtung des Schablonenträgers geneigten Anlageflächen versehen sein.

Ferner sollte der Spulenträger in Betriebsstellung der Vorrichtung arretiert sein. Dies kann in der Weise geschehen, in dem die Exzenterwellen jeweils mit einem Rastnocken versehen werden, der mit einer verschwenkbar gelagerten, vorzugsweise federbelasteten Rastnase in den in den Schablonenträger eingearbeiteten Längsschlitz eingreift, wobei der Rastnocken mit einem Griffstück ausgestattet sein sollte.

Die vorzugsweise abgestuft ausgebildeten Führungsplatten eines Spulenträgers sollten untereinander beispielsweise mittels eines diese durchgreifenden in eine Bohrung geführten Stiftes, mittels einer innenseitig angebrachten Platte od. dgl. formschlüssig miteinander verbunden sein.

Des weiteren ist es angebracht, die Trennplatten eines Spulenträgers in ihrer Breite gegenüber den jeweils zugeordneten Führungsplatten zurückgesetzt auszubilden. Die Abnahme einer gewickelten Spule wird dadurch weiter erleichtert.

Zur Halterung der Führungsplatten können diese auch an einer parallel zu dem Schablonenträger angeordneten Schiene abgestützt werden. Dies kann in einfacher Ausgestaltung in der Weise bewerkstelligt werden, dass die Schiene auf den mit den Grundplatten verbundenen Wellen gehalten und in in die Führungsplatten eingearbeiteten Nuten geführt ist.

Eine zusätzliche gemeinsame lineare Rückführung der vorzugsweise in in die Führungsplatten eingearbeiteten Nuten gehaltenen Trennplatten ist dadurch zu erreichen, in dem an der Exzenterwelle aussermittig zu dieser drehbar gelagerte Scheiben angebracht und die Trennplatten mit diese aufnehmenden Ausnehmungen versehen werden, die ein- oder beidseitig der Exzenterwelle einen Freigang und eine senkrecht zur Verstellrichtung verlaufende Anlagefläche aufweisen, wobei die Trennplatten eines Spulenträgers untereinander formschlüssig verbunden sein sollten.

Um die Exzenterwelle leicht verdrehen zu können, ist es ferner angebracht, diese mit einem vorzugsweise achssenkrecht abstehenden Griffstück zu versehen.

Mitunter ist es ausreichend, nur einen der Spulenträger exzentrisch zu lagern. Der andere Spulenträger kann in diesem Fall aus unmittelbar auf der mit der Grundplatte verbundenen Welle aufgesteckten Führungsplatten und zwischen diesen angeordneten Trennplatten gebildet werden.

Nach einer andersartigen Ausgestaltung kann der Spulenträger auch aus einer mit Kammern versehenen Welle od. dgl. und einer mit dieser verbundenen Exzenterscheibe bestehen, die drehbar auf der Grundplatte gehalten und mit dem Schablonenträger verrastbar ist.

Zweckmässig ist es des weiteren, die Exzenterwelle mittels einer beispielsweise in diese eingesetzten und sich an der die Spulenträger verbindenden Leiste abstützenden Federraste od. dgl. zu arretieren.

Vorteilhaft ist es ferner, zur Aufnahme der Wikkelvorrichtung einen zwei- oder mehrarmigen Wendetisch vorzusehen, der schrittweise entsprechend der Teilung der Arme um eine vertikal gerichtete Achse drehbar gelagert ist, wobei zumindestens eine auf einem der horizontal verlaufenden Arme des Wendetisches angeordnete Vorrichtung mit einem Antriebsmotor kuppelbar sein sollte, so dass ständig weitergearbeitet werden kann.

Die gemäss der Erfindung ausgebildete Vorrichtung zur Herstellung von Rotor- oder Statorspulen für elektrische Maschinen ist nicht nur einfach in der konstruktiven Ausgestaltung und damit auf wirtschaftliche Weise herzustellen, sondern auch sehr leicht zu handhaben und ermöglicht es vor allem, dass gewickelte Spulen rasch und ohne Schwierigkeiten von den Spulenträgern abgenommen werden können. Werden nämlich eine oder beide Spulenträger exzentrisch zu ihrer Rotationsachse verdrehbar oder achssenkrecht zu dieser verschiebbar auf einer mit dem Schablonenträger verbundenen Grundplatte gehalten, kann problemlos und ohne dass die Spulenträger von dem Schablonenträger abgenommen werden müssen, der seitliche Abstand der äusseren Flächen der Spulenträger, an denen die gewickelte Spule anliegt, durch eine Drehung um 180° oder eine Axialverschiebung einer Leiste, deren Verstellbewegung mittels Hebel umgelenkt wird, verkleinert werden. Wird der Abstand zwischen den äusseren Flächen der Spulenträger um eine durch die Exzentrizität bzw. die Verstellbewegung und/oder die Hebelverhältnisse bestimmbare Wegstrecke verkürzt, so können auch Spulen gleicher Grösse ohne Behinderung durch die die Kammern begrenzenden Seitenwände von den Spulenträgern abgenommen werden.

Beschädigungen der gewickelten Spulen sind bei einer derartigen Abnahme nahezu ausgeschlossen, da die Spulenträger nicht aus den Spulen herausgedreht werden müssen, sondern diese ohne Schwierigkeiten abzustreifen sind. Trotz des geringen Bauaufwandes ist somit eine rationelle Herstellung von Spulen jeder Art auch in einer Serienfertigung zu bewerkstelligen. Und da der seitliche Abstand der Spulenträger zueinander leicht aber dennoch exakt mittels der auswechselbaren Verbindungsleiste und der Führungsschiene eingestellt werden kann, kann eine Vorrichtung ohne grossen zusätzlichen Abstand in kurzer Zeit umgerüstet werden. Mit Hilfe der vorschlagsgemäss ausgebildeten Wickelvorrichtung sind somit ohne weiteres Spulen gleicher und unterschiedlicher Grössen, insbesondere aber auch, da die Exzenterwelle bzw. die verschiebbare Leiste klein gehalten werden kann, Spulen mit kleinen Krümmungsradien bei einfacher Handhabung in vorteilhafter Weise herzustellen.

In der Zeichnung sind drei Ausführungsbeispiele der gemäss der Erfindung ausgebildeten Vorrichtung zur Herstellung von Rotor- oder Statorspulen für elektrische Maschinen dargestellt und nachfolgend im einzelnen erläutert. Hierbei zeigen:

Fig. 1 einen Spulenträger der an der Antriebswelle einer Wickelmaschine angebrachten Vorrichtung zur Herstellung von Spulen gleicher Grösse, teilweise im Schnitt, in Betriebsstellung,

Fig. 2 die Vorrichtung nach Fig. 1 in Draufsicht,

Fig. 3 den Spulenträger nach Fig. 1 in Draufsicht, in einer um 180° geschwenkten Lage,

Fig. 4 die Ausgestaltung einer Vorrichtung zur Herstellung von Spulen unterschiedlicher Grösse in einem achssenkrechten Schnitt, in Betriebsstellung,

Fig. 5 die Vorrichtung nach Fig. 4 in Draufsicht,

Fig. 6 die Vorrichtung nach Fig. 4, wobei der exzentrisch gelagerte Spulenträger um 180° geschwenkt dargestellt ist,

Fig. 7 die Vorrichtung nach Fig. 6 in Draufsicht,

Fig. 8 die Vorrichtung nach Fig. 4 mit einer andersartigen Ausgestaltung der zur Verstellung des Spulenträgers vorgesehenen Betätigungsglieder,

Fig. 9 einen Wendetisch zur Aufnahme von Wikkelvorrichtungen in Ansicht und

Fig. 10 den Wendetisch nach Fig. 9 in Draufsicht.

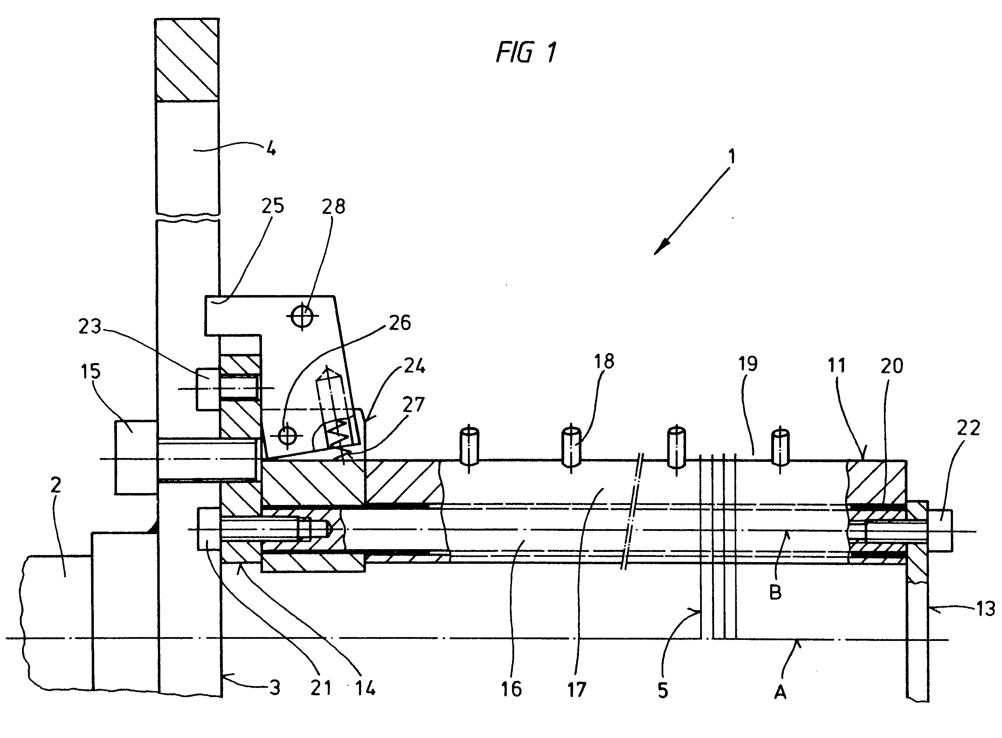

Die in den Fig. 1 bis 3 dargestellte und mit 1 bezeichnete Vorrichtung ist an der antreibbaren Welle 2 einer Wickelmaschine befestigt und dient zur Herstellung von Spulen für elektrische Maschinen. Dazu sind zwei Spulenträger 11 und 12 vorgesehen, die über Grundplatten 14 mit einem Schablonenträger 3 verbunden sind, der an der Welle 2 fest angebracht ist. Die beiden, um die Rotationsachse A umlaufenden Spulenträger 11 und 12 weisen Kammern 19 auf, in denen der zugeführte Spulendraht 5 zu einzelnen Spulen gleicher Länge gewickelt wird.

Um die gewickelten Spulen rasch und ohne Schwierigkeiten von den wellenförmigen Spulenträgern 11 und 12 abnehmen zu können, sind diese exzentrisch zu ihrer Längsachse verdrehbar auf den Grundplatten 14 gehalten, so dass der seitliche Abstand der äusseren Flächen der Spulenträger 11 und 12, an denen die Spulen anliegen, leicht verkleinert werden kann. Dazu dient jeweils eine an den Grundplatten 14 mittels einer Schraube 21 befestigte Welle 16, auf der über Kunststoffbüchsen 20 eine Exzenterwelle 17, an der zur Bildung der Aufnahmekammer 19 abstehende Stifte 18 angebracht sind, drehbar gelagert ist.

Ausserdem ist jede Exzenterwelle 17 mit einem Rastnocken 24 ausgestattet, der eine Rastnase 25 aufweist, die zur Fixierung der Exzenterwelle 17 in der Betriebsstellung in einen in den Schablonenträger 3 eingearbeiteten Längsschlitz 4 eingreift. Die Rastnase 25 ist mittels eines Stiftes 26 entgegen der Kraft einer Druckfeder 27 verschwenkbar gehalten und mit einem Griffstück 28 versehen.

Die Grundplatten 14 sind mittels den Längsschlitz 4 durchgreifender Spannschrauben 15 an dem Schablonenträger 3 verstellbar befestigt. Ausser der Schraube 21, mittels der die Welle 16 mit der Grundplatte 14 verbunden ist, steht von diesen jeweils eine weitere Schraube 23 ab und greift in den Längsschlitz 4 ein, so dass durch diese eine exakte seitliche Führung gewährleistet ist.

Zur einfachen Einstellung der jeweils zu wikkelnden Spulengrösse und zur Erhöhung der Stabilität sind die Spulenträger 11 und 12 auf der den Grundplatten 16 gegenüberliegenden Enden über eine Leiste 13 miteinander verbunden, die mittels Schrauben 22 in der Drehachse B der Exzenterwelle 17 an den Wellen 16 befestigt sind. Die Leiste 13 kann somit rasch ausgewechselt werden.

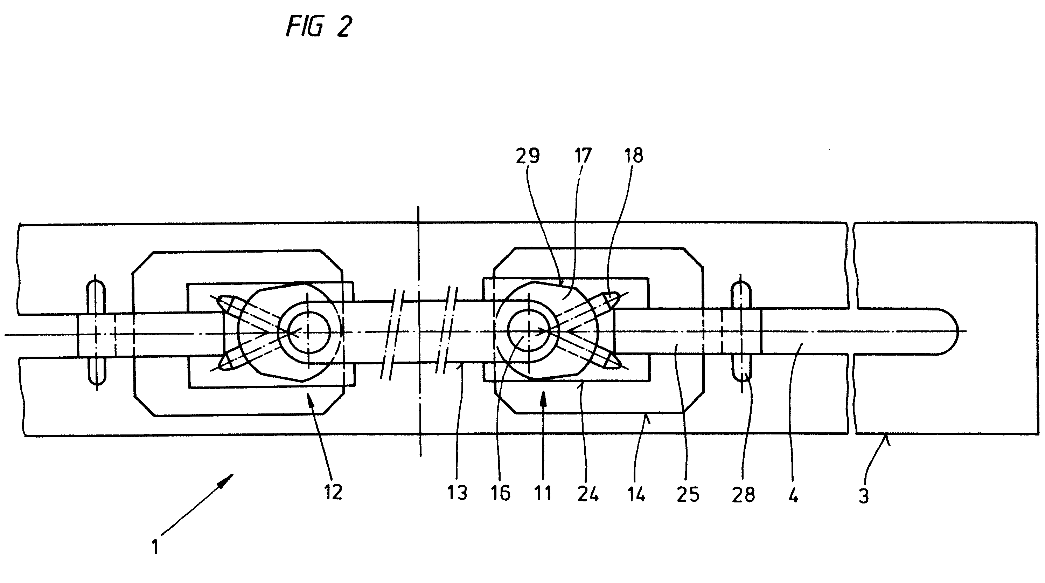

In der in den Fig. 1 und 2 gezeigten Betriebsstellung der Vorrichtung 1 können mittels dieser Spulen gleicher Grösse gewickelt werden. Der Spulendraht 5 wird dabei durch Drehung der Spulenträger 11 und 12 um die Rotationsachse A in den einzelnen, durch die achssenkrecht nach aussen abstehenden paarweise V-förmig angeordneten Stifte 18 gebildeten Kammern 19 zu Spulen gewickelt. Und da die Exzenterwelle 17 mit seitlich geneigten Anlageflächen 29 versehen ist, können auch Spulen mit kleinen Krümmungsradien gefertigt werden.

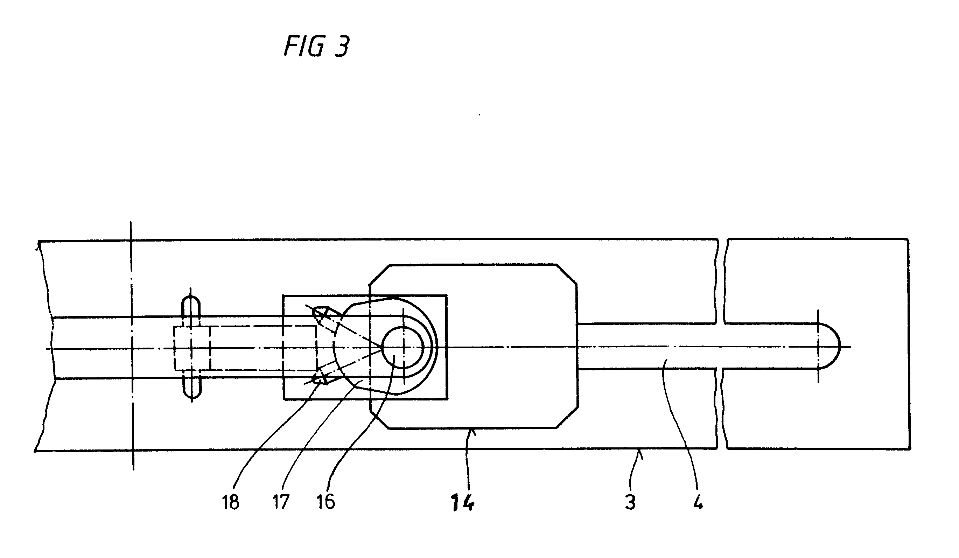

Zur Aufnahme der gewickelten Spulen von den Spulenträgern 11 und 12 sind diese, wie dies in Fig. 3 gezeigt ist, um die Drehachse B um ca. 180° zu verdrehen, so dass die Stifte 18 sich gegenüberstehen. Dazu ist die Rastnase 25 anzuheben, um die Verriegelung der Spulenträger 11 und 12 mit dem Schablonenträger 3 zu lösen. Sodann können die Exzenterwellen 17 um ca. 180° gedreht werden. Da jedoch die äusseren Flächen der Exzenterwellen 17 einen grösseren Abstand von der Drehachse B aufweisen als deren inneren Flächen, wird durch die Drehung der Exzenterwelle 17 in den gewickelten Spulen der seitliche Abstand zwischen den beiden Spulenträgern 11 und 12 verringert, ausserdem liegen die Spulen nunmehr auf den glatten Flächen der Exzenterwelle 17 auf, so dass die Spulen leicht und ohne Behinderung von diesen in kurzer Zeit und ohne dass zusätzliche Sicherungsmassnahmen, wie sorgfältiges Abbinden der Spulen, erforderlich sind. Beschädigungen der gewickelten Spulen bei der Abnahme sind auf diese Weise nahezu ausgeschlossen.

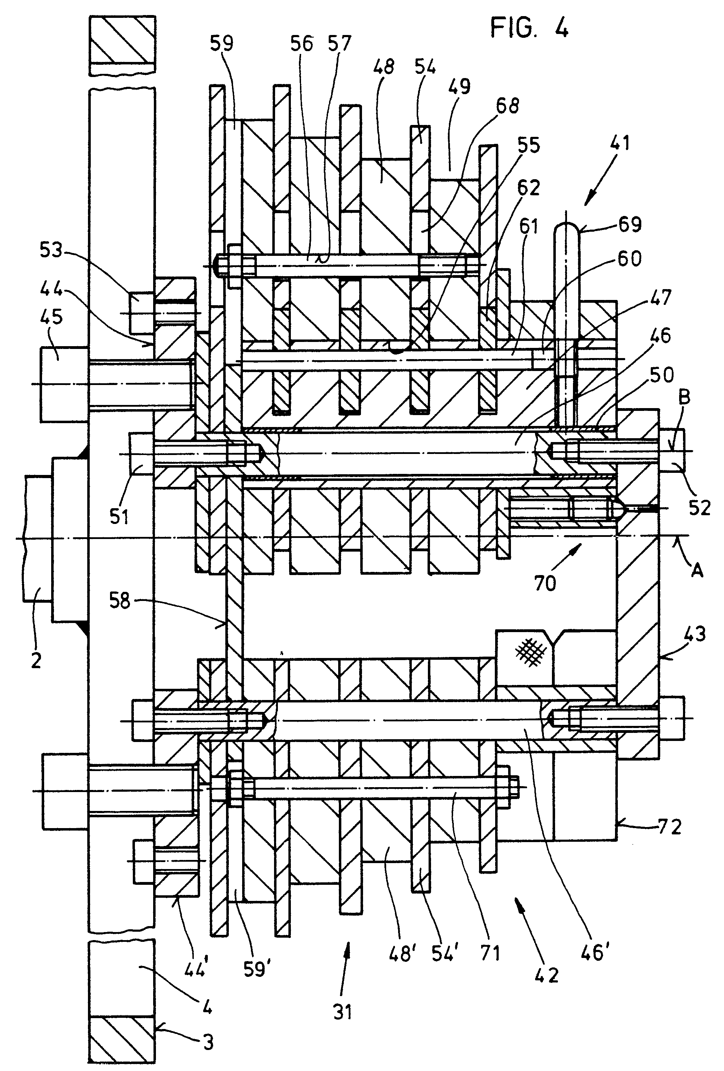

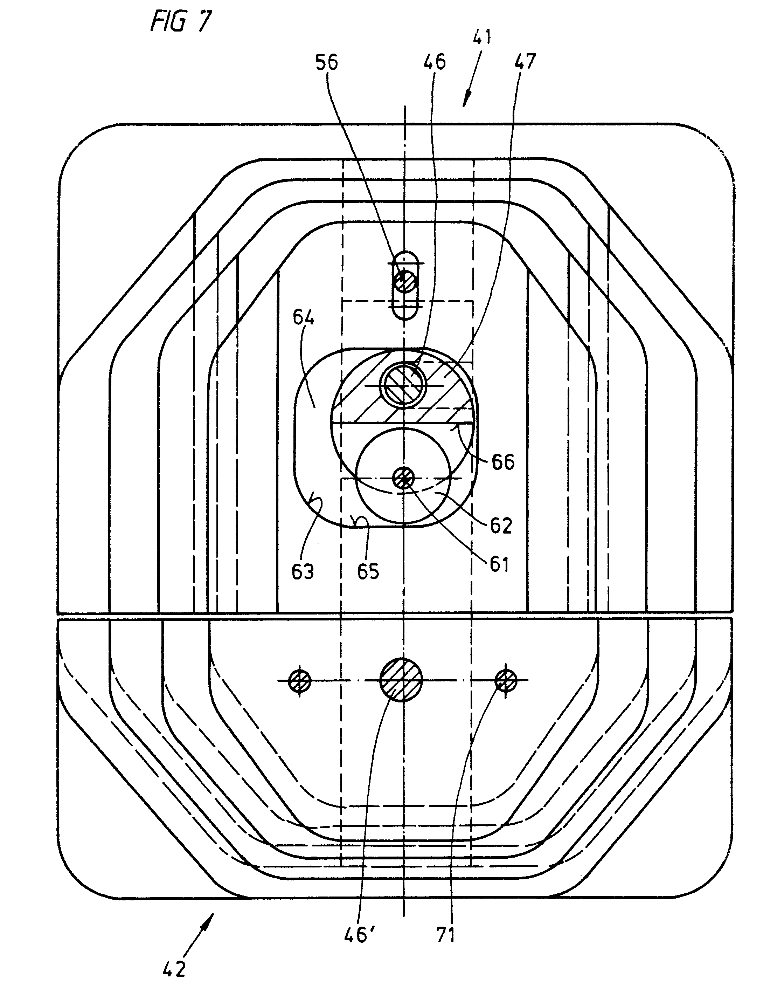

Mittels der in den Fig. 4 bis 7 dargestellten Vorrichtung 31, die in gleicher Weise wie die Vorrichtung nach den Fig. 1 bis 3 aufgebaut ist, können Spulen unterschiedlicher Grösse hergestellt werden. Die mit 41 und 42 bezeichneten Spulenträger sind hierbei wiederum mittels Grundplatten 44 und 44' verschiebbar an dem Schablonenträger 3 befestigt, und zwar mittels Spannschrauben 45, die in den Spulenträger 3 eingearbeiteten Längsschlitz 4 durchgreifen.

Bei diesem Ausführungsbeispiel ist lediglich einer der Spulenträger, nämlich der Spulenträger 41, exzentrisch gehalten. Dazu ist auf einer mit der Grundplatte 44 mittels einer Schraube 51 befestigten Welle 46 über Kunststoffbüchsen 50 eine Exzenterwelle 47 drehbar gelagert, auf der zur Schaffung von unterschiedlich grossen Aufnahmekammern 49 für den Spulendraht abgestuft ausgebildete Führungsplatten 48 aufgesteckt sind, zwischen denen Trennplatten 54 angeordnet sind. Die Führungsplatten 48 sind dazu jeweils mit einer kreisförmigen Ausnehmung 55 für die Exzenterwelle 47 versehen. Ausserdem sind diese mittels eines Stiftes 56, der in Bohrungen 57 eingesetzt ist, untereinander verbunden und über eine Schiene 58 abgestützt.

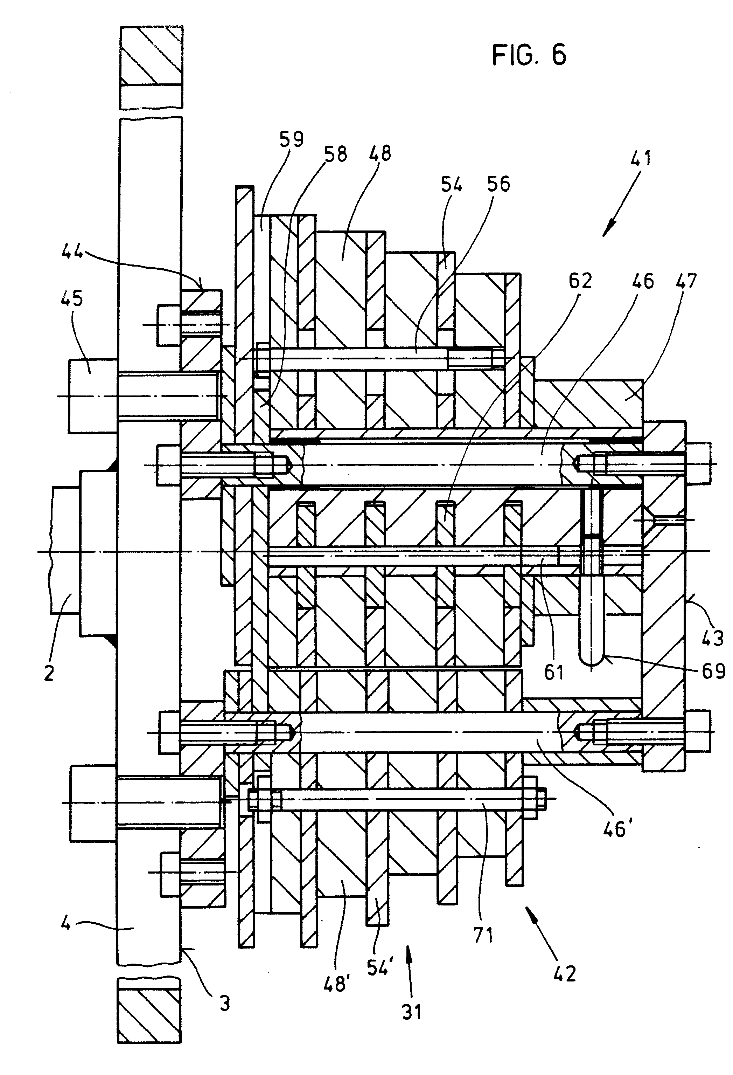

Bei dem Spulenträger 42 dagegen sind die ebenfalls unterschiedlich gross bemessenen Führungsplatten 48' unmittelbar auf einer an der Grundplatte 44' befestigten Welle 46' aufgesteckt und die zwischen diesen angeordneten Trennplatten 54' sind durch Stifte 71, die in den Fig. 4 und 6 jeweils um 90° versetzt dargestellt sind, miteinander fest verbunden. Ausserdem ist auf der Welle 46' ein Klemmhalter 72 für den Spulendraht angebracht.

An den den Grundplatten 44 und 44' abgekehrten Seiten ist mittels Schrauben 52 an den Spulenträgern 41 und 42 eine Verbindungsleiste 43 befestigt, ausserdem sind diese über die Schiene 58, die in in die inneren Führungsplatten 48 und 48' eingearbeiteten Nuten 59 und 59' geführt ist, abgestützt. Mit Hilfe der Verbindungsleiste 53 und der ebenfalls auf den Wellen 46 und 46' gehaltenen Schiene 58, die beide auswechselbar sind, kann auf einfache Weise somit der Achsabstand der beiden Spulenträger 41 und 42 zueinander verändert werden. Die Grundplatten 44 und 44', die mittels der Schrauben 51 und 53 in dem Längsschlitz 4 des Schablonenträgers 3 geführt sind, können dazu durch Lösen der Spannschrauben 45 gegeneinander verstellt werden.

Nach dem Wickeln der Spulen können diese auch bei der Vorrichtung 31 problemlos von den Spulenträgern 41 und 42 abgenommen werden. Dazu ist lediglich die Exzenterwelle 47 des Spulenträgers 41, die zu diesem Zweck mit einem achssenkrecht abstehenden Griffstück 69 ausgestattet ist, um ca. 180° zu verdrehen. Dadurch wird der Abstand zwischen den äusseren Flächen der Spulenträger 41 und 42 entsprechend der gewählten Exzentrizität verkleinert, die gewickelten Spulen können somit leicht aus den Kammern 49 herausgenommen und von der Vorrichtung 31 abgenommen werden.

Um das Abstreifen der gewickelten Spulen durch die Trennplatten 54 nicht zu behindern, ist ferner vorgesehen, diese zusätzlich nach innen einzuziehen. Um dies zu ermöglichen, sind in schlitzartigen in die Exzenterwelle 47 eingearbeiteten Freisparungen 66 auf einem in einer durchgehenden Bohrung 60 der Exzenterwelle 47 gehaltenen Bolzen 61 Scheiben 62 angeordnet und die Trennplatten 54 sind mit diesen zugeordneten Ausnehmungen 63 versehen, die einen Freigang 64 und eine senkrecht zur Verstellrichtung verlaufende Anlagefläche 65 aufweisen.

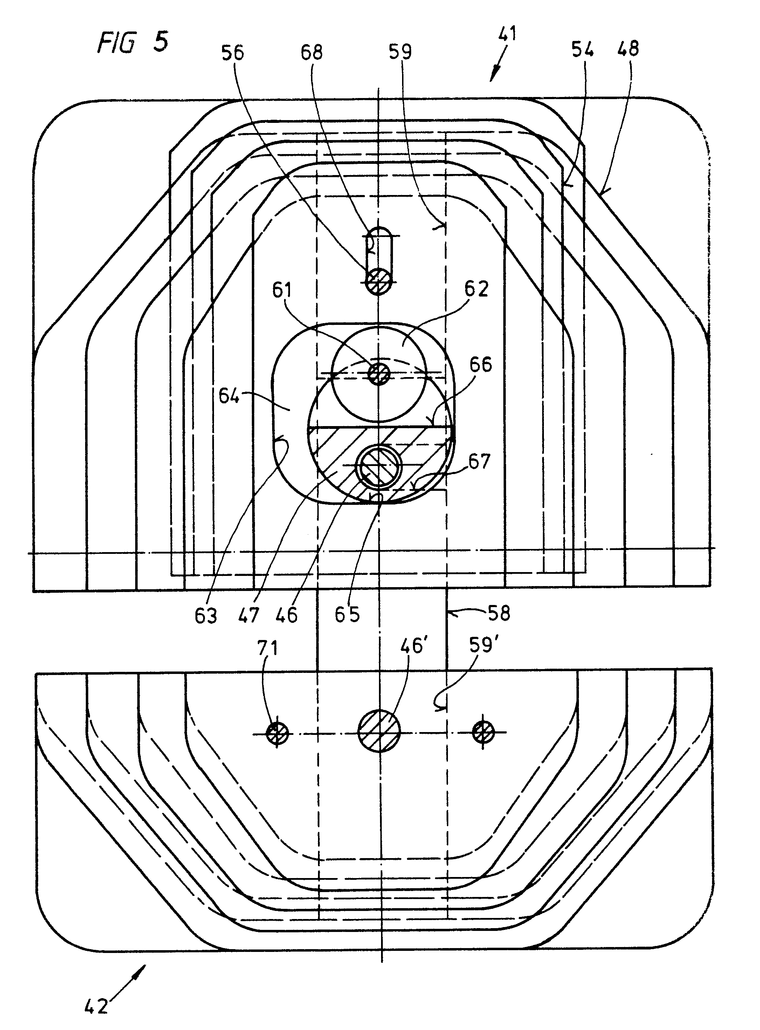

Bei einer Drehung der Exzenterwelle 47, die durch eine mit der Leiste 43 zusammenwirkende Federraste 70 in der in den Fig. 4 und 5 gezeigten Betriebsstellung arretierbar ist, werden zunächst die Führungsplatten 48 und die mit diesen über den Stift 56 verbundenen Trennplatten 54 des Spulenträgers 41 in Richtung des Spulenträgers 42 zurückgeführt. Diese Rückführung wird durch die Schiene 58, die dabei seitlich ausgelenkt wird, da diese im Bereich der Welle 46 mit einer schlitzartigen Freisparung 67 versehen ist, nicht beeinträchtigt. Sobald aber die Scheiben 62 an den Flächen 65 der Trennplatten 54 zur Anlage kommen, werden diese zusätzlich linear nach innen verstellt, und zwar zweckmässigerweise um eine Wegstrecke, dass diese, wie dies in Fig. 6 gezeigt ist, mit den Führungsplatten 48 bündig und die einzelnen Spulen ohne Beeinträchtigung durch die Trennplatten 54 abzunehmen sind. Der auch die Trennplatten 54 untereinander verbindende Stift 56 ist jeweils in einem Langloch 68 in diesen geführt, so dass die zusätzliche Verstellbewegung durch diesen nicht behindert wird. Der Verstellweg der Trennplatten 54 kann durch eine entsprechende Abstimmung der zusammenwirkenden Teile bestimmt werden.

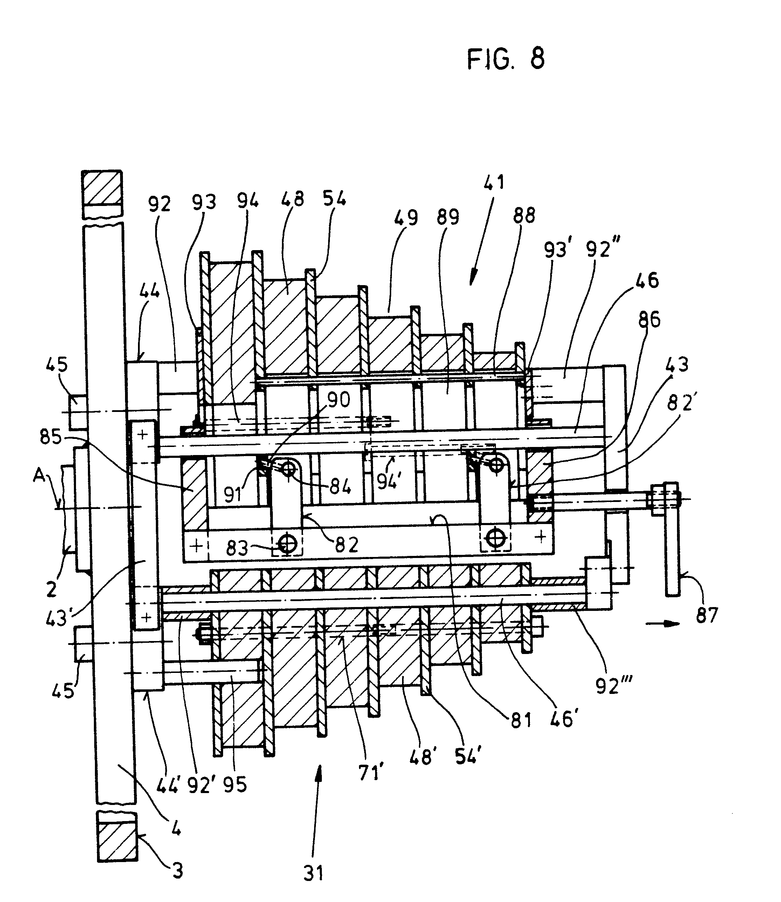

Bei der Vorrichtung nach Fig. 8, die in ihrem Aufbau im wesentlichen der Vorrichtung nach den Fig. 4 bis 7 entspricht, so dass auch die gleichen Bezugsziffern verwendet wurden, sind die Führungsplatten 48 sowie die Trennplatten 54, die in in den Führungsplatten 48 eingearbeiteten nicht bezeichneten Nuten geführt sind, senkrecht zur Rotationsachse A verschwenkbar angeordnet. Dazu dient eine in Achsrichtung verschiebbare Leiste 81, die über zwei Hebel 82 und 82' mit zwei der untereinander gekoppelten Führungsplatten 48 verbunden ist. Die Hebel 82 und 82' sind über Bolzen 83 und 84 gelenkig an der Leiste 81 und den Führungsplatten 48 befestigt.

Zur verkantungsfreien Führung der Leiste 81 dienen zwei an deren Enden angebrachte Streben 85 und 86, die auf der Welle 46, auf der der Spulenträger 41 gehalten ist, geführt sind. Ausserdem ist die Strebe 86 mit einem Griffstück 87 versehen, an dem lediglich in Pfeilrichtung zu ziehen ist, um die Führungsplatten 48 nach innen zu verschieben. Über die Hebel 82 und 82' wird nämlich die Verstellbewegung der Leiste 81 in Richtung der Drehachse A in eine achssenkrechte Bewegung der Führungsplatten 48 umgelenkt.

Die zwischen den Führungsplatten 48 angeordneten Trennplatten 54, durch die die Aufnahmekammern 49 für den Spulendraht begrenzt sind, werden bei einer Verstellbewegung der Führungsplatten 48 mitgenommen, da die Trennplatten 54 durch einen Stift 88 miteinander verbunden sind, an dem sich die Führungsplatten 48 anlegen. Damit jedoch die Trennplatten 54 weiter als die Führungsplatten 48 nach innen geschoben werden können, und zwar bis zur Bündigkeit mit den Führungsplatten 48, sind diese jeweils mit einer den Stift 88 aufnehmenden Aussparung 89 versehen und an den Hebeln 82 und 82' ist ein Ansatz 90 angebracht, der in eine in die Trennplatte 54 eingearbeitete Nut 91 eingreift. Der Verstellweg der Leiste 81 wird somit entsprechend den gewählten Hebelverhältnissen übersetzt, so dass in der inneren Endlage der Führungsplatten 48 die Trennplatten 54 mit diesen bündig sind und die gewickelte Spule leicht von den Spulenträgern 31 und 41 abgestreift werden kann.

Der nicht verstellbare Spulenträger 31 sowie der verstellbare Spulenträger 41 sind bei dem Ausführungsbeispiel nach Fig. 8 mittels Distanzhülsen 92, 92', 92'' und 92''' und Anlaufscheiben 93 und 93' an den Grundplatten 44 und 44' sowie der Verbindungsleiste 43 abgestützt. Ausserdem sind die Grundplatten 44 und 44' durch eine weitere Verbindungsleiste 43' miteinander gekoppelt. Mit Hilfe der auswechselbaren Verbindungsleisten 43 und 43' kann der Abstand zwischen den Spulenträgern 31 und 41, um Spulen kleineren oder grösseren Durchmessers zu wickeln, verändert werden. Mittels der Schrauben 94 und 94' sind die Führungsplatten 48 und die Trennplatten 54 des Spulenträgers 41 miteinander verbunden. Des weiteren ist an der Grundplatte 44' ein in Achsrichtung abstehender Stift 95 angebracht, der in den Spulenträger 31 eingreift, so dass dieser arretiert ist.

Die Trennplatten 54 sind, wie dies auch der Fig. 5 entnommen werden kann, in ihrer Breite schmäler bemessen als die Führungsplatten 48, so dass die zu wickelnde Spule zwar nur im oberen und unteren Bereich der Aufnahmekammern 49 geführt ist, die Trennplatten 54 aber leicht nach innen zu verschieben sind und die gewickelte Spule ohne Schwierigkeiten abgenommen werden kann. Beim Wickeln von Spulen muss nicht allen Aufnahmekammern 49 Spulendraht zugeführt werden, sondern es kann selbstverständlich auch nur in einer oder mehreren der Aufnahmekammern 49, je nachdem welche Spulengrösse zu wickeln ist, eine Wicklung vorgenommen werden.

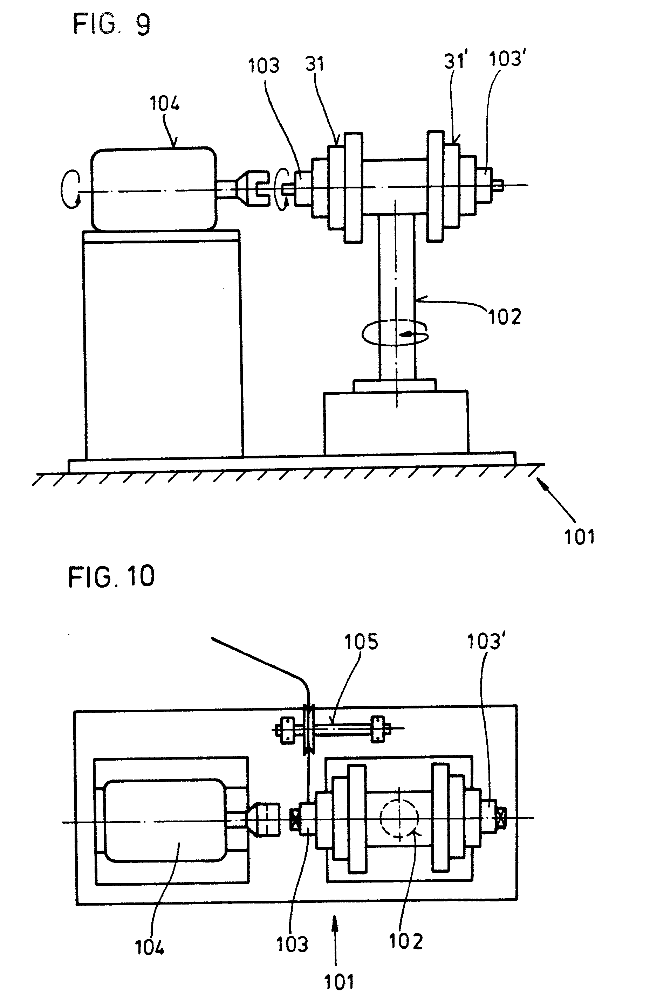

In den Fig. 9 und 10 ist des weiteren ein Wendetisch 101 gezeigt, mittels dem in vorteilhafter Weise die Herstellung von Spulen zu bewerkstelligen ist. Der Wendetisch 101 weist hierbei einen lotrecht angeordneten Ständer 102 auf, an dem zwei horizontal gerichtete Arme 103 und 103' zur Aufnahme von Wickelvorrichtungen 31 und 31' angebracht sind. Einer der Arme ist jeweils mit einem Antriebsmotor 104 kuppelbar, so dass beispielsweise der Arm 103' mit einer Wickelvorrichtung bestückt werden kann, während gleichzeitig mittels der auf dem Arm 103 angeordneten Wickelvorrichtung 31, in dem diese mit dem Antriebsmotor 104 verbunden wird, Spulen gewickelt werden können. Der Spulendraht wird dabei den einzelnen Kammern über eine Drahtzuführung 105 auf die Vorrichtung 31 gebracht und kann, ohne dass dieser zu durchtrennen ist, nach einer Drehung des Wendetisches 101 um 180° auch der Wickelvorrichtung 31' zugeführt werden. Eine rationelle Arbeitsweise ohne grosse Unterbrechungen ist somit gewährleistet.

## Patentansprüche

1. Vorrichtung (3; 31) zur Herstellung von Rotor- oder Statorspulen für elektrische Maschinen, bestehend aus zwei mit seitlichem Abstand zueinander auf einem an einer Wickelmaschine (2) angebrachten antreibbaren Schablonenträger (3) befestigten Spulenträgern (11, 12; 41), die mit einer oder mehreren übereinander angeordneten Kammern (19; 49) gleicher oder unterschiedlicher Grösse zur Aufnahme des Spulendrahtes (5) versehen sind, wobei in jeweils zwei auf gleicher Höhe liegenden Kammern (19; 49) der Spulenträger (11, 12; 41), der zu einer Spule aufzuwickelnde Spulendraht (5) während des Spulenwickelns geführt ist und ein oder beide Spulenträger (11, 12; 41) exzentrisch zu ihrer Längsachse verdrehbar jeweils auf einer Grundplatte (14; 44) gehalten sind, die mit dem Schablonenträger (3) verbindbar sind, dadurch gekennzeichnet, dass die Spulenträger (11, 12; 41) jeweils aus einer exzentrisch auf einer mit der Grundplatte (14; 44) verbundenen Welle (16; 46) verdrehbar gelagerten Exzenterwelle (17; 47) gebildet sind, an der unmittelbar oder mittels Zwischengliedern die Kammern (19; 49) zur Aufnahme des Spulendrahtes (5) angebracht sind.

2. Vorrichtung (31) zur Herstellung von Rotor- oder Statorspulen für elektrische Maschinen, bestehend aus zwei mit seitlichem Abstand zueinander auf einem an einer Wickelmaschine (2) angebrachten antreibbaren Schablonenträger (3) befestigten Spulenträgern (41, 42), die mit einer oder mehreren übereinander angeordneten Kammern (49) gleicher oder unterschiedlicher Grösse zur Aufnahme des Spulendrahtes (5) versehen sind, wobei in jeweils zwei auf gleicher Höhe liegenden Kammern (49) der Spulenträger (41, 42) der zu einer Spule aufzuwickelnde Spulendraht während des Spulenwickelns geführt ist und ein oder beide Spulenträger (41, 42) achssenkrecht zu ihrer Längsachse verschiebbar sind, dadurch gekennzeichnet, dass die Spulenträger (41, 42) jeweils aus auf einer mit der Grundplatte (44, 44') verbundenen Welle (46, 46') aufgesteckten Führungsplatten (48, 48') und zwischen diesen angeordneten Trennplatten (54, 54') gebildet sind und dass zur Verschiebung des Spulenträgers (41) eine parallel zur Längsachse verstellbare Leiste (81) vorgesehen ist, mit der über einen oder mehrere verschwenkbare Hebel (82, 82') die auf der Welle (46) gehaltenen untereinander gekoppelten Führungsplatten (48) verbunden sind.

3. Vorrichtung nach Anspruch 2, dadurch gekennzeichnet, dass die zwischen den Führungsplatten (48) angeordneten Trennplatten (54) mit diesen über einen durchgehenden Stift (88) od. dgl. über einen Teil des Verstellweges zwangsläufig verbunden sind.

4. Vorrichtung nach Anspruch 2 oder 3, dadurch gekennzeichnet, dass zur zusätzlichen Verstellung der miteinander verbundenen Trennplatten (54) an mindestens einem verschwenkbar gelagerten Hebel (82, 82') ein Ansatz (90) angebracht ist, der in eine in eine Trennplatte (54) eingearbeitete Nut (91) eingreift.

5. Vorrichtung nach einem oder mehreren der Ansprüche 2 bis 4, dadurch gekennzeichnet, dass die verschiebbare Leiste (81) mittels zweier, an deren Ende angebrachter Führungsstreben (85, 86) auf der die verstellbaren Führungsplatten (48) tragenden Welle (46) geführt und mit einem in die der Grundplatte (44) gegenüberliegenden Strebe (86) eingesetzten Griffstück (87) versehen ist.

6. Vorrichtung nach einem oder mehreren der Ansprüche 1 bis 5, dadurch gekennzeichnet, dass die Spulenträger (11, 12; 41, 42) in einem oder beiden Endbereichen über eine vorzugsweise auswechselbar befestigten Leiste (13; 43, 43') oder Schiene (58) miteinander verbunden sind.

7. Vorrichtung nach einem oder mehreren der Ansprüche 1 bis 6, dadurch gekennzeichnet, dass mindestens eine der Grundplatten (14; 44) senkrecht zur Rotationsachse (A) des Schablonenträgers (3) verstellbar mit diesem verbunden ist.

8. Vorrichtung nach Anspruch 7, dadurch gekennzeichnet, dass zur Verstellung der Grundplatten (14; 44) in den Schablonenträger (3) ein Längsschlitz (4) eingearbeitet ist, in dem diese mit einem oder mehreren, beispielsweise in Form von zylindrisch ausgebildeten Ansätzen (Schrauben 21, 23; 51, 53) geführt sind, und dass die Grundplatten (14; 44) und der Schablonenträger (3) mittels den Längsschlitz (4) durchgreifender Schrauben (15; 45) miteinander verspannbar sind.

9. Vorrichtung nach einem oder mehreren der Ansprüche 1 bis 8, dadurch gekennzeichnet, dass die Kammern (19) zur Aufnahme des Spulendrahtes (5) durch Unterteilen der Exzenterwelle (17) mittels in diese eingesetzter, vorzugsweise zwei jeweils V-förmig von dieser in Längsrichtung des Schablonenträgers (3) abstehender Stifte gebildet sind.

10. Vorrichtung nach einem oder mehreren der Ansprüche 1 bis 8, dadurch gekennzeichnet, dass die Kammern (49) zur Aufnahme des Spulendrahtes (5) durch auf die Exzenterwelle (47) aufgesetzte, durch diese verstellbare vorzugsweise abgestufte Führungsplatten (48) und zwischen diesen angeordneten Trennplatten (54) gebildet sind.

11. Vorrichtung nach einem oder mehreren der Ansprüche 1 und 2 sowie 6 bis 10, dadurch gekennzeichnet, dass die Exzenterwellen (17) mit vorzugsweise beidseitig angebrachten und in Längsrichtung des Schablonenträgers (3) geneigten Anlageflächen (29) versehen sind.

12. Vorrichtung nach einem oder mehreren der Ansprüche 1 und 2 sowie 6 bis 11, dadurch gekennzeichnet, dass zur Arretierung der Spulenträger (11, 12) in Betriebsstellung der Vorrichtung (1) die Exzenterwellen (17) jeweils mit einem Rastnocken (24) versehen sind, der mit einer verschwenkbar gelagerten, vorzugsweise federbelasteten Rastnase (25) in den in den Schablonenträger (3) eingearbeiteten Längsschlitz (4) eingreift.

13. Vorrichtung nach Anspruch 12, dadurch gekennzeichnet, dass der Rastnocken (25) mit einem Griftstück (28) versehen ist.

14. Vorrichtung nach einem oder mehreren der Ansprüche 1 bis 13, dadurch gekennzeichnet, dass die vorzugsweise abgestuft ausgebildeten Führungsplatten (48) eines Spulenträgers (41) untereinander, beispielsweise mittels eines diese durchgreifenden in einer Bohrung (57) geführten Stiftes (56), mittels einer innenseitig angebrachten Platte od. dgl. formschlüssig miteinander verbunden sind.

15. Vorrichtung nach einem oder mehreren der Ansprüche 1 bis 14, dadurch gekennzeichnet, dass die Trennplatten (54, 54') eines Spulenträgers (41, 42) in ihrer Breite gegenüber den jeweils zugeordneten Führungsplatten (48, 48') zurückgesetzt ausgebildet sind.

16. Vorrichtung nach einem oder mehreren Ansprüche 1 bis 15, dadurch gekennzeichnet, dass die Führungsplatten (48) der Spulenträger (41, 42) an einer parallel zu dem Schablonenträger (3) angeordneten Schiene (58) abgestützt sind.

17. Vorrichtung nach Anspruch 16, dadurch gekennzeichnet, dass die die Führungsplatten (48, 48') abstützende Schiene (58) auf den mit den Grundplatten (44, 44') verbundene Wellen (46, 46') gehalten und in in die Führungsplatten (48, 48') eingearbeiteten Nuten (59, 59') geführt ist.

18. Vorrichtung nach einem oder mehreren der Ansprüche 1 bis 17, dadurch gekennzeichnet, dass zur zusätzlichen gemeinsamen Rückführung der vorzugsweise in in die Führungsplatten (48) eingearbeiteten Nuten gehaltenen Trennplatten (54) an der Exzenterwelle (47) aussermittig zu dieser drehbar gelagerte Scheiben (62) angebracht und die Trennplatten (54) mit diese aufnehmenden Ausnehmungen (63) versehen sind, die ein- oder beidseitig der Exzenterwelle (47) einen Freigang (64) und eine senkrecht zur Verstellrichtung verlaufende Anlagefläche (65) aufweisen.

19. Vorrichtung nach Anspruch 18, dadurch gekennzeichnet, dass die Trennplatten (54) eines Spulenträgers (41) untereinander formschlüssig verbunden sind.

20. Vorrichtung nach einem oder mehreren der Ansprüche 6 bis 19, dadurch gekennzeichnet, dass zur Verdrehung der Exzenterwelle (47) diese mit einem vorzugsweise achssenkrecht abstehenden Griffstück (69) versehen ist.

21. Vorrichtung nach einem oder mehreren der Ansprüche 14 bis 20, dadurch gekennzeichnet, dass einer der Spulenträger (42) einer Vorrichtung (31) aus unmittelbar auf der mit der Grundplatte (44') verbundenen Welle (46') aufgesteckten Führungsplatten (48') und zwischen diesen angeordneten Trennplatten (49') gebildet ist.

22. Vorrichtung nach Anspruch 1, dadurch gekennzeichnet, dass der Spulenträger (42) aus einer mit Kammern versehenen Welle od. dgl. und einer mit dieser verbundenen Exzenterscheibe besteht, die drehbar auf der Grundplatte gehalten und mit dem Schablonenträger verrastbar ist.

23. Vorrichtung nach einem oder mehreren der Ansprüche 6 bis 22, dadurch gekennzeichnet, dass die Exzenterwelle (47) mittels einer beispielsweise in diese eingesetzten und sich an der die Spulenträger (41, 42) verbindenden Leiste (43) abstützenden Federraste (70) od. dgl. arretierbar ist.

24. Vorrichtung nach einem oder mehreren der Ansprüche 1 bis 23, dadurch gekennzeichnet, dass zur Aufnahme der Vorrichtung (1; 31) ein zwei- oder mehrarmiger Wendetisch (101) vorgesehen ist, der schrittweise entsprechend der Teilung der Arme (103, 103') um eine vertikal gerichtete Achse drehbar gelagert und in unterschiedlichen Winkelstellungen arretierbar ist, und dass zumindest eine auf einem der horizontal verlaufenden Arme (103) des Wendetisches (101) angeordnete Vorrichtung (1) mit einem Antriebsmotor (104) kuppelbar ist.

**Claims**

1. Device (3; 31) for producing rotor or stator coils for electrical machines, consisting of two coil carriers (11, 12; 41) mounted with lateral distance to each other to a drivable template carrier (3) fixed to a coil winding machine (2), which coil carriers are provided with one or more chambers (19; 49) located one upon the other having same or different sizes for receiving the coil wire (5) to be wound to a coil, whereby in two chambers (19; 49) respectively positioned in same hight of the coil carrier (11, 12; 41) the coil wire (5) is guided when winding, and one or both of the coil carriers (11, 12; 41) are eccentrically with regard to their longitudinal axis and rotatably fixed to a base plate (14; 44) which is connectable to the template carrier, characterized in that the coil carriers (11, 12; 41) are assembled from an eccentric shaft (17; 47) eccentrically pivoted on a shaft (16; 46) connected to the base plate (14; 44), to which eccentric shaft directly or by means of intermediate parts the chambers (19; 49) for receiving the coil wire (5) are mounted.

2. Device (31) for producing rotor or stator coils for electrical machines, consisting of two coil carriers (41, 42) mounted with lateral distance to each other to a drivable template carrier (3) fixed to a coil winding machine (2), which coil carriers are provided with one or more chambers (49) located one upon the other having same or different sizes for receiving the coil wire (5) to be wound to a coil, whereby in two chambers (49) respectively positioned in same high of the coil carrier (41, 42) the coil wire (5) is guided when winding, and one or both of the coil carriers (41, 42) are shiftable normal to their longitudinal axis, characterized in that the coil carriers (41, 42) are assembled from guide plates (48, 48') sitting on a shaft (46, 46') connected to the base plate (44, 44') and further assembled from dividing plates (54, 54') located between the guide plates, and that for shifting the coil carrier (41) a ledge (81) is provided being adjustable parallel to the longitudinal axis, to which guide plates (48) are connected by means of one or more hinged levers (82, 82') which guide plates are held on the shaft (46) and are linked each other.

3. Device of claim 2, characterized in that the dividing plates (54) located between the guide plates (48) are compulsary connected with the guide plates by means of a running through pin (88) or the like over a part of the way of adjustment.

4. Device of claim 2 or 3, characterized in that for additional adjustment of the dividing plates (54) connected to each other at least to one pivoted lever (82, 82') a protrusion (90) is mounted, meshing into a groove (91) in the dividing plate (54).

5. Device of one or more of the claims 2 through 4, characterized in that the shiftable ledge (81) guided by means of two guide braces (85, 86) connected to the ends of the ledge by which braces the adjustable guide plate carrying shaft (46) is guided and provided with a handle (87) inserted into the brace (86) opposite to the base plate (44).

6. Device of one or more of the claims 1 through 5, characterized in that the coil carriers (11, 12; 41, 42) in one or both end areas are connected to each other by means of a preferably interchangeable fixed ledge (13; 43, 43') or a rail (58).

7. Device of one or more of the claims 1 through 6, characterized in that at least one of the base plates (14; 44) is adjustably connected to the template carrier (3) normal to the axis of rotation (A).

8. Device of claim 7, characterized in that for adjusting the base plates (14; 44) in the template carrier (3) a longitudinal slot (4) is provided, in which the base plates with one or more protrusions are guided, for example by means of cylindrical protrusions (screws 21, 23; 51, 53), and that the base plates (14; 44) and the template carrier (3) are connected together by means of screws (15; 45) extending through the longitudinal slot (4).

9. Device of one or more of the claims 1 through 8, characterized in that the chamber (19) for receiving the coil wire (5) are formed by dividing the eccentric shaft (17) by pins inserted into the eccentric shaft, preferably two pins extending from the eccentric shaft in longitudinal direction of the template carrier (3) utilizing a V-shape.

10. Device of one or more of the claims of 1 through 8, characterized in that the chambers (49) for receiving the coil wire (5) are formed by guide plates (48) mounted to the eccentric shaft (47) adjustable and preferably stepped and dividing plates (54) located between the guide plates.

11. Device of one or more of the claims 1 and 2 and 6 through 10 as well, characterized in that the eccentric shafts (17) are provided with stop surfaces (29) preferably on both sides of the template carrier (3) and inclined in the longitudinal direction of the template carrier.

12. Device of one or more of the claims 1 and 2 and 6 through 11 as well, characterized in that for locking the coil carriers (11, 12) in operating position of the device (1) the eccentric shafts (17) are provided with a locking cam (24) extending with a pivoted preferably spring biased locking protrusion (25) into the longitudinal slot (4) of the template carrier (3).

13. Device of claim 12, characterized in that the locking protrusion (25) is provided with a handle (28).

14. Device of one or more of the claims 1 through 13, characterized in that the guide plates (48), preferably step shaped, of a coil carrier (41) are connected to each other by their forms, for example by means of a pin (56) extending through the guide plates and guided in a hole (57), by means of a plate mounted to the inner side or the like.

15. Device of one or more of the claims 1 through 14, characterized in that the dividing plates (54, 54') of a coil carrier (41, 42) are smaller compared with the guiding plates (48, 48').

16. Device of one or more of the claims 1 through 15, characterized in that the guiding plates (48) of the coil carrier (41, 42) are supported by a rail (58) positioned parallel to the template carrier (3).

17. Device of claim 16, characterized in that the rail (58) supporting the guiding plates (48, 48') is held on the shafts (46, 46') connected to the base plates (44, 44') and is guided in grooves (59, 59') provided in the guiding plates (48, 48').

18. Device of one or more of the claims 1 through 17, characterized in that for the additional common guiding back the dividing plates (54) held in grooves preferably located in the guiding plates (48) at the eccentric shaft (47) eccentrically to same discs (62) are pivoted, and the dividing plates (54) are provided with openings (63) having a free space (64) on one or both sides of the eccentric shaft (47) and further having a support surface (65) positioned normal to the direction of adjustment.

19. Device of claim 18, characterized in that the dividing plates (54) of one coil carrier (41) are connected by shape to each other.

20. Device of one or more of the claims 6 through 19, characterized in that for turning the eccentric shaft (47) same is provided with a preferably normal to the axis extending handle piece (69).

21. Device of one or more of the claims 14 through 20, characterized in that one of the coil carriers (42) of one device (31) is formed from guiding plates (48') directly fixed to the shaft (46') which is connected to the base plate (44') and is further formed from dividing plates (49') located between the guiding plates.

22. Device of claim 1, characterized in that the coil carrier (42) consists of a shaft or the like having chambers and an eccentric disc connected to the shaft, which eccentric disc is turnable held on the base plate and lockable with the template carrier.

23. Device of one or more of the claims 6 through 22, characterized in that the eccentric shaft (47) is lockable by means of a spring biased detent (70) or the like for example inserted into the eccentric shaft and supported by the ledge (43) connecting the coil carrier (41, 42).

24. Device of one or more of the claims 1 through 23, characterized in that for accommodating the device (1; 31) a turnable table (101) having two or more arms is provided according to the division of the arms (103, 103') stepwise pivoted around a vertical directed axis and lockable in different angular positions, and that at least one device (1) on one of the horizontal oriented arms (103) of the turnable table (101) may be coupled to

**Revendications**

1. Dispositif (3; 31) pour la fabrication de bobines de stators ou rotors pour machines électriques se composant de deux supports de bobines (11, 12; 41), placés avec un écartement latéral l'un par rapport à l'autre et fixés au support-gabarit (3) entraînable placé sur une machine de bobinage (2) qui sont munis d'une ou plusieurs chambres (19; 49) disposées l'une au dessus de l'autre, de taille identique ou différente pour la prise du fil du bobinage (5), d'où les deux chambres (19; 49), se trouvant à la même hauteur, des supports de bobines (11, 12; 41) guidé sur une bobine du fil de bobine à enrouler (5) pendant l'enroulement de la bobine et un ou deux supports de bobine (11, 12; 41) sont maintenus excentriquement, de façon tournante, par rapport à leur axe longitudinal, sur une plaque de base (14; 44) et qui sont raccordables avec le support-garabit (3) ainsi désigné, de sorte que les supports de bobine (11, 12; 41) sont conçus à partir d'un arbre excentrique (17; 47) rotatif logé sur un arbre (16; 46) relié avec la plaque de base (14; 44) sur lesquels sont placées les chambres (19; 49), directement ou au moyen d'éléments intermédiaires pour la prise du fil de bobinage.

2. Dispositif (31) pour la fabrication de bobines de stators ou rotors pour machines électriques se composant de deux supports de bobine (41, 42), placés avec un écartement latéral l'un par rapport à l'autre et fixés au support-gabarit (3) entraînable placé sur une machine de bobinage (2) qui sont munis d'une ou plusieurs chambres (49) disposées l'une au dessus de l'autre, de taille identique ou différente pour la prise du fil de bobinage (5) d'où chacune des deux chambres (49), se trouvant à la même hauteur, des supports de bobine (41, 42) guidé sur une bobine du fil de bobine à enrouler et un ou deux supports de bobine (41, 42) sont déplaçables verticalement par rapport à leur axe longitudinal ainsi désigné, de sorte que les supports de bobine (41, 42) sont conçus à partir de plaques de séparation (54, 54') disposées entre ceux-ci et des plaques de guidage (48, 48') emmanchées sur un arbre (46, 46') relié avec la plaque de base (44, 44'), de sorte que pour le déplacement du support de bobine (41) il est prévu une réglette (81) déplacable parallèlement à l'axe longitudinal avec laquelle, à l'aide d'un ou plusieurs leviers pivotants (82, 82') sont reliées les plaques de guidage (48) accouplées l'une au dessous de l'autre et maintenues sur l'arbre (46).

3. Dispositif selon le droit 2 ainsi désigné, de sorte que les plaques de séparation (54) placées entre les plaques de guidage (48) sont reliées provisoirement à celles-ci à l'aide d'une goupille (88) ou similaire sur une partie de la course de réglage.

4. Dispositif selon le droit 2 ou 3 ainsi désigné, de sorte que pour le réglage supplémentaire des plaques de séparation (54) reliées entre-elles, il est placé un tampon (90) sur au moins un levier pivotant (82, 82') qui est en prise dans une gorge (91) usinée dans une plaque de séparation (54).

5. Dispositif selon un ou plusieurs des droits 2 à 4, ainsi désigné, de sorte que la réglette déplaçable (81) est guidée au moyen de deux pièces de guidage (85, 86) placées à leur extrémité sur l'arbre (46) supportant les plaques de guidage réglables (48) et sont munies d'une poignée (87) insérée dans la pièce opposée (86) de la plaque de base (44).

6. Dispositif selon un ou plusieurs des droits 1 à 5, ainsi désigné, de sorte que les supports de bobine (11, 12; 41, 42) sont reliés entre-eux à l'aide d'une réglette de préférence remplaçable (13; 43, 43') fixée dans une ou dans les deux partie finales ou à l'aide d'une glissière (58).

7. Dispositif selon un ou plusieurs des droits 1 à 6, ainsi désigné, de sorte qu'au moins une des plaques de base (14; 44) soit reliée de façon réglable avec celle-ci et verticalement par rapport à l'axe de rotation (A) du support-gabarit (3).

8. Dispositif selon le droit 7, ainsi désigné, de sorte que pour le réglage des plaques de base (14; 44) dans le support-gabarit (3) il a été usiné un trou oblong (4) dans lequel elles sont guidées avec un ou plusieurs tampons conçus, par exemple sous la forme cylindrique (vis 21, 23; 51, 53) et de sorte que les plaques de base (14; 44) et le support-gabarit (3) sont fixables entre elles à l'aide des vis (15; 45) traversant la fente longitudinale (4).

9. Dispositif selon un ou plusieurs des droits 1 à 8, ainsi désigné, de sorte que les chambres (19) servant à la prise du fil de bobine (5) sont formées par les parties inférieures de l'arbre d'excentrique (17) au moyen de goupilles insérées dans celle-ci, de préférence deux en forme de V et dépassant de celui-ci dans le sens longitudinal du support-gabarit (3).

10. Dispositif selon un ou plusieurs des droits 1 à 8, ainsi désigné, de sorte que les chambres (49) servant à la prise du fil de bobine (5) sont formées par ces plaques de guidage (48) réglables, de préférence étagées placées sur l'arbre d'excentrique (47) et entre les plaques de séparation (54).

11. Dispositif selon un ou plusieurs des droits 1 et 2 ainsi 6 et 10, ainsi désigné, de sorte que les arbres d'excentrique (17) sont munis de faces d'appui (29) placées de préférence des deux côtés et dans le sens longitudinal du support-garabit (3).

12. Dispositif selon un ou plusieurs des droits 1 et 2 ainsi que 6 à 11, ainsi désigné, de sorte que pour le blocage du porte-bobine (11, 12) dans la position de service du dispositif (1) les arbres d'excentrique (17) sont munis d'une came de verrouillage (24) qui, à l'aide d'un nez de verrouillage (25) de préférence commandé par ressort et logé de façon pivotante est en prise dans la fente longitudinale (4) usinée dans le support-gabarit (3).

13. Dispositif selon le droit 12, ainsi désigné, de sorte que la came de verrouillage (25) est équipée d'une pièce de préhension (28).

14. Dispositif selon un ou plusieurs des droits 1 à 13, ainsi désigné, de sorte que les plaques de guidage (48), conçues de préférence de façon étagée, d'un support de bobine (41) sont reliées l'une au dessous de l'autre, par exemple au moyen d'une goupille (56) guidée dans un perçage (57) et mécaniquement entre-elles à l'aide d'un plaque placée côté intérieur ou similaire.

15. Dispositif selon un ou plusieurs des droits 1 à 14, ainsi désigné, de sorte que les plaques de séparation (54, 54') d'un support de bobine (41, 42) sont conçues, dans leur largeur, en retrait à l'opposé de chaque plaque de guidage (48, 48').

16. Dispositif selon un ou plusieurs des droits 1 à 15, ainsi désigné, de sorte que les plaques de guidage (48) du support de bobine (41, 42) sont étayées sur une glissière (58) disposée parallèlement au support-gabarit (3).

17. Dispositif selon le droit 16, ainsi désigné, de sorte que la glissière (58) étayant les plaques de guidage (48, 48') est maintenue sur les arbres (46, 46') reliés avec les plaques de base (44, 44') et est guidée dans les gorges (59, 59') usinées dans les plaques de guidage (48, 48').

18. Dispositif selon un ou plusieurs des droits 1 à 17, ainsi désigné, de sorte que pour le rappel commun et supplémentaire, des plaques de séparation (54) maintenues dans les gorges usinées dans les plaques de guidage (48), les disques rotatifs (62) sont placés excentriquement sur l'arbre d'excentrique (47) par rapport à celui-ci et les plaques de séparation (54) sont munies d'évidements support (63) présentant une voie libre (64) d'un côté ou de deux côtés de l'arbre d'excentrique (47) et une surface d'appui (65) se développant verticalement par rapport au sens du réglage.

19. Dispositif selon le droit 18, ainsi désigné, de sorte que les plaques de séparation (54) d'un support de bobine (41) sont reliées entre-elles mécaniquement.

20. Dispositif selon un ou plusieurs des droits 1 et 2 ainsi que 6 à 19, ainsi désigné, de sorte que pour la torsion de l'arbre d'excentrique (47) celui-ci est muni, de préférence, d'une pièce de préhension (69) dépassant verticalement à l'axe.

21. Dispositif selon un ou plusieurs des droits 14 à 20, ainsi désigné, de sorte qu'un support de bobine (42) d'un dispositif (31) est formé directement à partir des plaques de guidage (48') emmanchées sur l'arbre (46') relié avec la plaque de base (44') et les plaques de séparation (49') placées entre celles-ci.

22. Dispositif selon le droit 1, ainsi désigné, de sorte que le support de bobine (42) se compose d'un arbre muni de chambres ou similaire et d'un disque d'excentrique relié à celui-ci qui est maintenu de façon à pouvoir tourner sur la plaque de base et verrouillable avec le support-garabit.

23. Dispositif selon un ou plusieurs des droits 6 à 22, ainsi désigné, de sorte que l'arbre d'excentrique (47) peut être arrêté au moyen d'un cliquet à ressort (70) ou similaire prenant appui, par exemple, dans la réglette (43) reliée à celle reliant le support de bobine (41, 42).

24. Dispositif selon un ou plusieurs des droits 1 à 23, ainsi désigné, de sorte que pour la prise du dispositif (1; 31) il est prévu une table d'inversion (101) à deux ou plusieurs bras tournant progressivement sur un axe vertical en fonction de la séparation des bras (103, 103'), elle est également arrête dans des positions angulaires différentes et de sorte qu'il soit accouplé, au moins un dispositif (1) avec moteur d'entraînement (104) sur un bras (103) de la table d'inversion (101) et se développant horizontalement.

FIG 1

FIG 2

29  17  18

12    13  16  11  24  14  25  28  4    3

1

15

0 096 836

FIG 3

18   17   16          14              3        4

0 096 836

0 096 836

FIG. 4

FIG 5

0 096 836

FIG. 6

59  58  48        54  56              41

44                                    62    46   47

45

2

61        69

46'

3        48'  54'   71        42

4              31

23

FIG 7

56  46  41  47

64

66

62

61

63  65

42

46'  71

# FIG. 8

FIG. 9

104  103  31  31'  103'

102

101

FIG. 10

105  103'

104  103  102

101